# EUROPEAN PATENT APPLICATION

(11) **EP 2 860 387 A1**
(43) Date of publication of application: **15.04.2015**
(21) Application number: 13188375.3
(22) Date of filing: 11.10.2013
(51) Int. Cl.: F02M 55/00, F16L 13/14, F16L 33/213, F02M 61/16, B01D 29/00, B21D 39/00, F15B 13/00, F16K 3/00, F16D 5/00, F04B 53/00, F04D 29/00

(54) **Connection system**

(71) Applicant: Continental Automotive GmbH, 30165 Hannover (DE)
(72) Inventor: Bhat, Uday, 93053 Regensburg (DE); Ederer, Andreas, 93194 Walderbach (DE)

(57) **Abstract**

A connection system (2) is proposed, comprising a connector (4) having a first mating surface (6), a fluid port (8) having a second mating surface (10) and an expansion device (18), wherein the fluid port (8) comprises a bore with the second mating surface (10) being the inner surface of the bore. The connector (4) is insertable into the fluid port (8) with the first mating surface (6) being the outer surface of at least a section of the connector (4), such that the first mating surface (6) of the connector (4) is positionable adjacent to the second mating surface (10) of the fluid port. The expansion device (18) is insertable into the connector (4) and is adapted for at least partially introducing a pressing force onto the connector (4) such that the first mating surface (6) is pressed onto the second mating surface (10) at least partially. Thereby, a sealing connection is created between the connector (4) and the fluid port (8).

## Description

The invention relates to a connection system for fluid ports, in particular of pumps.

In known devices that interact with fluids and that comprise fluid ports, the most common ways for creating connections are press-fit connections or threaded connections. These options require precisely machined surfaces on connectors and in the fluid ports with strictly defined roughness and diameter tolerance values, which are expensive to achieve. Also, these connections may require sealing parts to avoid leakage of fuel, oil or other fluids. Reworking and especially grinding is mandatory for achieving the required quality of the surfaces. This is a time-consuming and expensive process.

It is therefore desirable to use other options for coupling connectors with fluid ports. Consequently, the object of the invention is to propose a connecting system for fluid ports, in particular of a pump, that allows to quickly and cost-effectively produce reliable, fluid-tight connections especially without the requirement to manufacture surfaces with strict roughness and size requirements.

This object is met by a connecting system comprising the features of independent claim 1. Further embodiments and improvements may be gathered from the sub-claims and the following description.

A connection system is proposed, comprising a connector having a first mating surface, a fluid port having a second mating surface and an expansion device, wherein the fluid port comprises a bore with the second mating surface being the inner surface of the bore, wherein the connector is insertable into the bore with the first mating surface being the outer surface of at least a section of the connector, such that the first mating surface of the connector is positionable adjacent to the second mating surface of the bore, and wherein the expansion device is insertable into the connector, wherein the expansion device is adapted for at least partially introduce a pressing force onto the radially outwards radially expandable such that it acts onto the connector for pressing the first mating surface onto the second mating surface.

In this context, the fluid port may simply be a bore inside a pump body or any other means that is connectable to a fluid line, which is to be connected to another fluid line or device. A great advantage of the connecting system according to the invention is the fact that there are no strict requirements regarding the roughness of this bore or any dimensional limitations or tolerances, as long as the connector may easily be inserted into the fluid port.

The connector insertable into the bore of the fluid port does not require any defined roughness values of the surface or any other dimensional limitations, too. Manufacturing the connector and the fluid port may consequently be accomplished in a very time-effective manner without sacrificing the connection quality that results after inserting the expansion device.

The combination of the expansion device and the connector is comparable to an expander plug, which may used for sealing openings in a reliable, fluid-tight manner. However, neither the expansion device nor the connector according to this invention requires a ball that is pushed through or into the interior of the expansion device in order to expand it.

The expansion device comprises an annular, ring-like cross-sectional surface and an essentially longitudinal extension and is comparable to a bushing. The expansion device may be manufactured from the same material as the connector, such that the deformation characteristics of both materials are generally equal. However, it may also be feasible to use a material with a clearly higher elasticity module than the connector such that the expansion device more accurately controls the pressing force between the two mating surfaces. Due to the bushing like shape with a central bore hole, fluids may easily flow through it. Hence, the expansion device does not hinder the flow between the fluid port and the connector.

In an advantageous embodiment, the expansion device is segmented in an axial direction and comprises a central segment with a first diameter and two adjacent end sections comprising at least one second diameter, wherein the first diameter is smaller than the inner diameter of the connector and wherein the at least one second diameter is greater than the inner diameter of the connector in an unassembled state. The two end segments may be bulges that protrude outwards in a radial direction.

The outer diameter of these bulges is not necessarily constant, but it may make a transition from the outer diameter of the center segment to a maximum outer diameter and may make a further transition from the maximum outer diameter to an end diameter at a side opposite to the connection of the central segment. Such a design supports a local pressing action of the expansion device to the inner surface of the connector. Consequently, two clearly defined expansion force rings act on the connector and press it to the inner surface of the bore. Further, this design reduces the force for introducing this expansion device into the connector compared to an expansion device with a single outer diameter.

As explained above, it is helpful to select the at least one second diameter and the inner diameter of the connector as a press fit. On insertion of the expansion device into the connector, the connector tends to compensate the pressing force by an expansion in a radial direction. In these regions, the first mating surface and the second mating surface are pressed against each other firmly.

To support forwarding the expansion device inside the connector, the first diameter and the inner diameter of the connector are selected as a clearance fit. Hence, at least this section of the expansion device does not affect the connector at all and does not require a higher forwarding force.

As already mentioned above, tapering off an introduction region of the expansion device simplifies the insertion of the expansion device into the connector. This may be accomplished by a chamfer and preferably a chamfer with a tapering angle in the range of 15° to 45° and more preferably 20° to 40°.

In a still further advantageous embodiment, the expansion device comprises an inner surface, to which a filter mesh is attached. The filter mesh covers the complete surface of the inner diameter of the expansion device and acts as a filter. Hence, a separate filter is not necessary and the expansion device conducts the tasks of connecting the connector to the bore and filter the flow of fluid through the connector.

In a still further advantageous embodiment, the filter protrudes over the insertion region of the expansion device, such that the active filter surface is clearly enlarged.

Further, it is advantageous to equip the connector with a plurality of ring-shaped elevations on the first mating surface. The elevations may be of a very small height in the region of a tenth of a mm, which may further enhance the fusion between the connector and the bore.

In a still further advantageous embodiment, the expansion device comprises an opening extending from an inside of the expansion device to the outside thereof. The lateral opening may have an elongated shape and may be positioned in the central segment if the expansion device is segmented. Its extension may be perpendicular to the axial extension of the expansion device. This allows to vent fuel from gaps between the expansion device and the connector and to prevent accumulation of fuel on an outside of the expansion device.

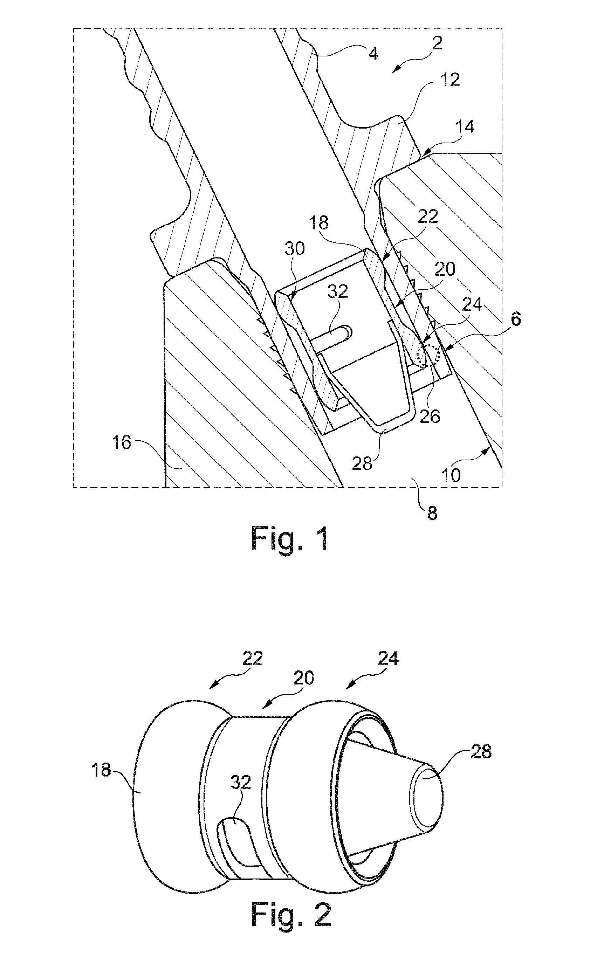

Further characteristics, advantages and application options of the present invention are disclosed in the following description of the exemplary embodiments in the figures. Identical or similar components in the figures have the same reference characters. Fig. 1 shows a connection system in an installed state in a sectional drawing.

Fig. 2 shows an expansion device of the connection system in a three-dimensional view.

Fig. 1 shows a connection system 2 comprising a connector 4 having a first mating surface 6 and a fluid port 8 having a second mating surface 10. The fluid port 8 is realized as a bore with a constant diameter. There are no strict requirements regarding the surface quality of the first mating surface 6 or the second mating surface 10. However, it is helpful to provide a clearance or preferably a sliding fit for enabling the easy insertion of the connector 4 into the fluid port 8.

For providing a defined insertion depth of the connector 4, it comprises an annular projection 12, which is realized as a shoulder having a planar contact surface that comes into contact with a delimiting surface 14, which is parallel to the annular projection, of a body 16, into which the fluid port 8 is integrated.

The connection system 2 also comprises an expansion device 18 having a generally annular shape with a central segment 20 and two end segments 22 and 24, that each are adjacent to the central segment 20. Central segment 20 comprises an outer diameter that is clearly smaller than the inner diameter of the connector 4.

The end segments 22 and 24 have a bulge-like shape with an outer diameter that makes a transition between the outer diameter of the central segment 20 and a maximum outer diameter that clearly exceeds the inner diameter of connector 4 in an unassembled state. Hence, the end segments are of a ball ring shape, which equals a ball shape with a central bore.

The end segment 24 comprises a tapered off introduction region 26 that allows the insertion of the expansion device 18 into connector 4. The insertion takes place by aligning the expansion device 18 in an opening of the connector 4 and is further forwarded by applying a continuous or alternating pressing force. To withstand the counterforce or reaction force of this pressing force, the annular protrusion 12 of the connector 4 is relatively thick. Forwarding the expansion device 18 in the connector 4 does not affect its integrity.

In order to provide a connection between the connector 4 and the fluid port 8, the connector 4 is introduced into the fluid port 8 by simply inserting or pushing it into the respective bore. Due to a clearance fit or preferably a sliding fit, there remains a slight gap around the connector 4, through which fluid may leak. To prevent this, the expansion device 18 must be inserted into the connector 4.

The expansion device 18 is inserted into an outer opening of the connector 4. The fit between the inner bore hole of the connector 4 and the outermost diameter of the expansion device must allow the connector 4 to expand, while the expansion device is further introduced. The fit between the expansion device, the connector 4 and the fluid port 8 is to be selected that the first mating surface of the connector 4 and the second mating surface of the fluid port are pressed against each other, in particular in the regions of the outer segments 22 and 24 of the expansion device. Due to the pressing action, the two mating surfaces 6 and 10 tightly close the gap and, in case the pressing force is large enough, they partially fuse or merge. Consequently, the connector 4 and the fluid port 8 in a sealed connection.

Nevertheless, the expansion device allows a flow-through of a fluid due to its inner bore. In the shown embodiment, a filter mesh 28 is attached to an inner surface 30 of the expansion device. This may be accomplished by welding, soldering, gluing or the like, depending on the material of the filter mesh 28. The filter mesh 28 exemplarily comprises the shape of a truncated cone, wherein the filter mesh 28 clearly protrudes over the introduction region 26. Therefore, a large active filter surface is provided.
Fig. 2 shows the expansion device 18 in a three-dimensional view and further clarifies the exemplarily chosen shapes for the end segments 22 and 24, which are realized as ball rings. The central segment 20 is a cylindrical section that connects the sphere rings. Thereby, two precisely defined circular force lines are created, when the expansion device 18 is inserted into the connector 4. The end segments 22 and 24 press the connector 4 to the inner surface 10 of the fluid port 8 and thereby induce a fusion between the first mating surface 6 and the second mating surface 10. In addition the end segments 22 and 24 may be of different outer diameters. The forwardly directed end segment 24 may comprise a slightly smaller diameter than the other end segment 22. This ensures that the fit between the outwardly pointing end segment 22 is much tighter than the fit between the inwardly pointing end segment 24 and the connector 4. This compensates any distortion that takes place at the inwardly pointing end segment 24 during press fit.

The expansion device further comprises an elongated opening 32 extending through the central segment 20 of the expansion device 18 in a radial direction, wherein the opening 32 is exemplarily arranged perpendicular to the axial extension of the expansion device 18. The opening 32 allows venting accumulated fuel between the central segment 20 and the connector 4, for preventing any hydrodynamic effects based on accumulated fuel that may affect the integrity of the connection between expansion device 18, connector 4 and fluid port 8.

In addition, it should be pointed out that "comprising" does not exclude other elements or steps, and "a" or "an" does not exclude a plural number. Furthermore, it should be pointed out that characteristics or steps which have been described with reference to one of the above exemplary embodiments can also be used in combination with other characteristics or steps of other exemplary embodiments described above. Reference characters in the claims are not to be interpreted as limitations.

### List of reference signs

- 2: Connection system
- 4: Connector
- 6: First mating surface
- 8: Fluid port
- 10: Second mating surface
- 12: Annular projection
- 14: Delimiting surface
- 16: Body
- 18: Expansion device
- 20: Central segment
- 22: End segment
- 24: End segment
- 26: Introduction
- 28: Filter mesh
- 30: Inner surface
- 32: Opening

## Claims

1. A connection system (2), comprising:
- a connector (4) having a first mating surface (6),
- a fluid port (8) having a second mating surface (10) and
- an expansion device (18),
wherein the fluid port (8) comprises a bore with the second mating surface (10) being the inner surface of the bore,
wherein the connector (4) is insertable into the fluid port (8) with the first mating surface (6) being the outer surface of at least a section of the connector (4), such that the first mating surface (6) of the connector (4) is positionable adjacent to the second mating surface (10) of the fluid port, and
wherein the expansion device (18) is insertable into the connector (4) and is adapted for at least partially introducing a pressing force onto the connector (4) such that the first mating surface (6) is pressed onto the second mating surface (10) at least partially.

2. The connection system (2) of claim 1,
wherein the elasticity module of the expansion device (18) is higher than the elasticity module of the connector (4).

3. The connection system (2) of claim 1 or 2,
wherein the expansion device (18) is segmented in an axial direction and comprises a central segment (20) with a first diameter and two adjacent end sections (22, 24) comprising at least one second diameter,
wherein the first diameter is smaller than the inner diameter of the connector (4) and
wherein the at least one second diameter is greater than the inner diameter of the connector (4) in an unassembled state.

4. The connection system (2) of claim 3,
wherein the second diameter and the inner diameter of the connector (4) are selected as a press fit.

5. The connection system (2) of claim 3 or 4,
wherein the first diameter and the inner diameter of the connector (4) are selected as a sliding fit.

6. The connection system (2) of any of the previous claims,
wherein the two end segments (22, 24) are realized as sphere rings.

7. The connection system (2) of any of the previous claims,
wherein one end segment (22, 24) comprises a tapered-off introduction region (26) for introducing the expansion device (18) into the connector (4).

8. The connection system (2) of any of the previous claims,
wherein the expansion device (18) comprises an opening extending from an inside of the expansion device (18) to an outside thereof.

9. The connection system (2) of any of the previous claims,
wherein the expansion device (18) comprises an inner surface, to which a filter mesh (28) is attached.

10. The connection system (2) of claim 9,
wherein the filter mesh (28) protrudes over the insertion (26) region of the expansion device (18).
